Europäisches Patentamt

European Patent Office

Office européen des brevets

Veröffentlichungsnummer: **0 318 673**

**A1**

# EUROPÄISCHE PATENTANMELDUNG

Anmeldenummer: **88116438.8**

Int. Cl.⁴: **B26F 1/44**

Anmeldetag: **05.10.88**

Priorität: **28.11.87 DE 3740435**

Veröffentlichungstag der Anmeldung:
**07.06.89 Patentblatt 89/23**

Benannte Vertragsstaaten:
**AT BE CH DE ES FR GB GR IT LI LU NL SE**

Anmelder: **Pelzer, Helmut**
**Neue Strasse 5**
**D-5804 Herdecke-Ende(DE)**

Erfinder: **Pelzer, Helmut**
**Neue Strasse 5**
**D-5804 Herdecke-Ende(DE)**

Vertreter: **Köchling, Conrad, Dipl.-Ing. et al**
**Patentanwälte, Dipl.-Ing. Conrad Köchling**
**Dipl.-Ing. Conrad-Joachim Köchling Fleyer**
**Strasse 135**
**D-5800 Hagen 1(DE)**

Schneidwerkzeug für Werkstücke aus langfaserigen Materialien.

Um ein Schneidwerkzeug (3) für Werkstücke aus langfaserigen Materialien (2), bestehend aus einem ortsfesten Gegen-Messer (4), das durch eine abgestufte Formkante insbesondere eines Preßformwerkzeuges (5) gebildet ist, und einem relativ zu letzterem verstellbar ausgebildeten Messer (6), welches durch eine Formkante des verschieblichen Teiles des Preßformwerkzeuges (8) gebildet ist, zu schaffen, mit dem ein weitgehend orthogonaler Schnitt an der Randkante eines relativ dicken Werkstückes aus Schaummaterial (1) und Fasermaterial (2) oder lediglich aus Fasermaterial (2) durchgeführt werden kann, wobei eine Mitnahme von Faserwerkstoff in den Schnittkantenbereich ausgeschlossen sein soll und einfache Nachstellmöglichkeiten bei Verschleiß der Schneidkanten ermöglicht sein sollen, wird vorgeschlagen, daß die Schneidkante des verstellbaren Messers (6) durch eine Fläche gebildet ist, die mit der Verstellebene (7) des Messers (6) einen spitzen Winkel bildet, wobei diese Fläche in der Schnittlage die Schneidkante des Gegenmessers (4) spitzwinklig kreuzend angeordnet ist.

Fig.1

## Schneidwerkzeug für Werkstücke aus langfaserigen Materialien

Die Erfindung betrifft ein Schneidwerkzeug für Werkstücke aus langfaserigen Materialien, Verbundwerkstücken aus mehrschichtigen Materialien, von denen mindestens eines langfaserig ist, oder dergleichen, bestehend aus einem ortsfesten Gegenmesser, das durch eine abgestufte Formkante insbesondere eines Preßformwerkzeuges gebildet ist, und einem relativ zu letzterem verstellbar ausgebildeten Messer, welches durch eine Formkante insbesondere des verschieblichen Teiles des Preßformwerkzeuges gebildet ist.

Insbesondere beim Abschneiden von überflüssigen Randkanten von Werkstücken aus langfaserigen Materialien oder auch Verbundwerkstücken aus mehrschichtigen Materialien, von denen mindestens eines, vorzugsweise die äußere Schicht, langfaserig ist, welche Teile beispielsweise zur Auskleidung von Innenräumen von Kraftfahrzeugen benutzt werden, sind bisher zwei Möglichkeiten vorgesehen worden, um eine saubere Schnittkante zu erreichen.

Die eine Möglichkeit bestand darin, daß beispielweise die Randkante der oberen Formhälfte eines Formwerkzeuges, in dem die entsprechenden Materialien geformt oder mit Schaumschichten versehen wurden, in Richtung auf die Randkante des unteren Formwerkzeuges als Messer vorstand, so daß beim Absenken der oberen Formhälte auf die untere Formhälfte bzw. dem Formwerkzeugtisch die relativ dicke Materialschicht, die zu durchtrennen war, zunächst durch das Messer eingedrückt und dann abgetrennt wurde, wobei es sich zwangsläufig ergeben mußte, daß die relativ oben liegende Materialschicht weiter abgeschnitten wurde, als die zuunterst liegende meist faserige Schicht, so daß nach Entnahme des Werkstückes aus der Form bzw. aus dem Schneidwerkzeug die oben liegende Deckschicht gegenüber der unten liegenden Bodenschicht zurückstand. Um diesem Problem auszuweichen, ist auch schon vorgeschlagen worden, die äußere Randkante des Formwerkzeugtisches als Gegenmesser zu benutzen und die relativ obere Formhälfte mit der als Messerkante ausgebildeten Randkante an dieser Kante des unteren Teiles vorbeilaufen zu lassen, so daß hierdurch eine Abtrennung im gewünschten Bereich erfolgen konnte. Auch hierbei trat der Nachteil auf, daß Deckschichten, also die im Werkzeug oben liegenden Schichten zu weit abgeschnitten waren und im Endzustand gegenüber der unten liegenden Schicht zurückstanden.

Desweiteren zeigte sich, daß insbesondere bei faserigen Werkstoffen diese Werkstoffe zwischen die Schneidkanten mit eingezogen wurden, so daß keine sauberen Schnitte zu erreichen waren. Darüber hinaus bedurfte es einer häufigen Nachjustierung und Einstellung der zusammenwirkenden Messerkante um ausreichende Schnittqualität gewährleisten zu können.

Ausgehend von diesem Stand der Technik liegt der Erfindung die Aufgabe zugrunde, ein Schneidwerkzeug gattungsgemäßer Art zu schaffen, mit dem ein weitgehend orthogonaler Schnitt an der Randkante eines relativ dicken Werkstückes aus Schaummaterial und Fasermaterial oder lediglich aus Fasermaterial durchgeführt werden kann, wobei eine Mitnahme von Faserwerkstoff in den Schnittkantenbereich ausgeschlossen sein soll und einfache Nachstellmöglichkeiten bei Verschleiß der Schneidkanten ermöglicht sein sollen.

Zur Lösung dieser Aufgabe schlägt die Erfindung vor, daß die Schneidkante des verstellbaren Messers durch eine Fläche gebildet ist, die mit der Verstellebene des Messers einen spitzen Winkel bildet, wobei diese Fläche in der Schnittlage die Schneidkante des Gegenmessers spitzwinklig kreuzend angeordnet ist.

Durch diese Ausbildung, bei der praktisch die Schneidkante des verstellbaren Messers durch eine Schrägfläche gebildet ist, die auf die Schneidkante des Gegenmessers aufläuft, ist einerseits sichergestellt, daß der Schneidvorgang bezüglich beim Schneiden zusammengepreßter Schichten des Werkstückes erst beim Auftreffen der Schneidkante des Gegenmessers auf die Schrägfläche des verstellbaren Messers bewirkt wird.

Andererseits ist ein Einziehen von Fasermaterial in den Schneidweg ausgeschlossen, da lediglich eine Schneidkante an einer Schneidfläche anliegt, nicht aber zwei Flächen als Schneidflächen aneinander vorbeigleiten. Schließlich ist es auch möglich, den Verschleiß von Gegenmesser bzw. verstellbarem Messer dadurch auszugleichen, daß das Teil, welches das verstellbare Messer umfaßt, geringfügig weiter abgesenkt wird.

Insgesamt wird mit der erfindungsgemäßen Ausbildung eine hervorragende Schnittqualität bei den hier interessierenden Materialien erreicht, wobei es sich dabei häufig um Fasermaterialien handelt, die einseitig mit PUR-Schaumschichten belegt sind.

Bevorzugt ist ferner vorgesehen, daß das Gegenmesser durch die Randkante eines im wesentlichen ebenen Formwerkzeugtisches gebildet ist, der von einer zu letzterem hin verstellbaren Hohlformhälfte übergreifbar ist, deren konische Seitenwandungen die Schneidfläche des verstellbaren Messers bilden.

Um zu vermeiden, daß das verstellbare Messer zu weit in Richtung auf das Gegenmesser abgesenkt wird, wird vorgeschlagen, daß ein einstellbarer Wegbegrenzungsanschlag gestellfest gehalten ist, an den Teile der das verstellbare Messer halternden Formhälfte in der Schnittstellung angelegt sind.

Der Wegbegrenzungsanschlag ist vorzugsweise so angeordnet, daß noch ein geringer Weg für die Weiterführung des verstellbaren Messers zur Verfügung steht, sobald die Schrägfläche auf die Schneidkante des ortsfesten Gegenmessers aufgetroffen ist. Dieser geringfügige Weg entspricht etwa der Materialelastizität der miteinander zum Eingriff kommenden Schnittkante bzw. Schnittfläche.

Desweiteren ist bevorzugt vorgesehen, daß die verstellbare Hohlformhälfte neben der Schneidfläche einen Vorsprung aufweist, der geringeren Abstand vom Formwerkzeugtisch aufweist als der Boden der Hohlformhälfte.

Durch diesen an der verstellbaren Hohlformhälfte vorgesehenen Vorsprung wird in unmittelbarer Nähe der späteren Schnittstelle das zu beschneidende Werkstück zusammengepreßt und so für den Schneidvorgang vorbereitet, so daß der Schnitt eine noch bessere Qualität besitzt.

Zwei Ausführungsbeispiele der Erfindung sind in der Zeichnung grob schematisiert dargestellt und im folgenden näher beschrieben.

Es zeigt:

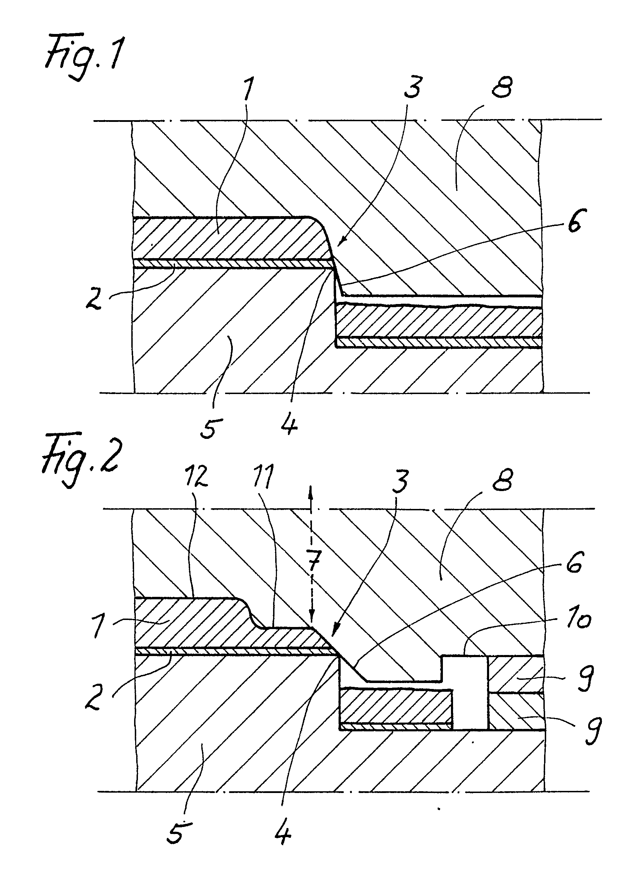

Fig. 1 eine erste Ausführungsform eines Schneidwerkzeuges stark vereinfacht im Schnitt;

Fig. 2 eine andere Ausführungsform in gleicher Darstellung.

Im Ausführungsbeispiel ist ein Werkstück aus einer PUR-Schaumschicht 1 und einer Schicht aus langfaserigem Material 2 in ein allgemein mit 3 bezeichnetes Schneidwerkzeug eingelegt.

Das Schneidwerkzeug besteht aus einem ortsfesten Gegenmesser 4, welches durch die Randkante eines im wesentlichen ebenen Formwerkzeugtisches 5 gebildet ist.

Ein relativ zu letzterem verstellbar ausgebildetes Messer 6 ist durch eine Fläche gebildet, die mit der Verstellebene angedeutet bei 7 des Messers 6 einen spitzen Winkel bildet.

Diese Fläche ist in der Schnittlage, die in den Zeichnungsfiguren gezeigt ist, die Schneidkante des Gegenmessers 4 kreuzend angeordnet.

Die die Schneidkante des verstellbaren Messers 6 bildende Fläche ist Bestandteil einer relativ oberen Hohlformhälfte 8, die den Formwerkzeugtisch 5 randseitig übergreift und dazu konische Seitenwandungen aufweist, die die Schneidfläche des verstellbaren Messers 6 bilden.

Beim Ausführungsbeispiel gemäß Fig. 2 ist ein einstellbarer Wegbegrenzungsanschlag 9 gestellfest gehalten, an welchen ein Teil 10 der das verstellbare Messer 6 halternden Formhälfte 8 in der Schnittstellung gemäß Fig. 2 angelegt ist. Bei eventuellem Verschleiß der Teile 4 oder 6 ist ein Nachstellen durch Veränderung des Wegbegrenzungsanschlages 9 sehr einfach möglich.

Als Besonderheit beim Ausführungsbeispiel gemäß Fig. 2 ist noch zu vermerken, daß die verstellbare Hohlformhälfte 8 neben der Schneidfläche 6 einen Vorsprung 11 aufweist, der geringeren Abstand vom Formwerkzeugtisch 5 besitzt als der Boden 12 der Hohlformhälfte.

Hierdurch wird im Bereich des Vorsprunges 11 das Material 1,2 zusammengepreßt und verfestigt, so daß eine bessere Schnittqualität im Bereich der Schneidwerkzeuge 4,6 erreichbar ist.

Die Erfindung ist nicht auf die Ausführungsbeispiele beschränkt, sondern im Rahmen der Offenbarung vielfach variabel.

**Ansprüche**

1. Schneidwerkzeug für Werkstücke aus langfaserigen Materialien, Verbundwerkstücken aus mehrschichtigen Materialien, von denen mindestens eines langfaserig ist, oder dergleichen, bestehend aus einem ortsfesten Gegen-Messer, das duch eine abgestufte Formkante insbesondere eines Preßformwerkzeuges gebildet ist, und einem relativ zu letzterem verstellbar ausgebildeten Messer, welches durch eine Formkante insbesondere des verschieblichen Teiles des Preßformwerkzeuges gebildet ist, **dadurch gekennzeichnet,** daß die Schneidkante des verstellbaren Messers (6) durch eine Fläche gebildet ist, die mit der Verstellebene (7) des Messers (6) einen spitzen Winkel bildet, wobei diese Fläche in der Schnittlage die Schneidkante des Gegenmessers (4) spitzwinklig kreuzend angeordnet ist.

2. Schneidwerkzeug nach Anspruch 1, **dadurch gekennzeichnet,** daß das Gegenmesser (4) durch die Randkante eines im wesentlichen ebenen Formwerkzeugtisches (5) gebildet ist, der von einer zu letzterem hin verstellbaren Hohlformhälfte (8) übergreifbar ist, deren konische Seitenwandungen die Schneidfläche des verstellbaren Messers (6) bilden.

3. Schneidwerkzeug nach Anspruch 1 oder 2, **dadurch gekennzeichnet,** daß ein einstellbarer Wegbegrenzungsanschlag (9) gestellfest gehalten ist, an den Teile der das verstellbare Messer (6) halternden Formhälfte (8) in der Schnittstellung angelegt sind.

4. Schneidwerkzeug nach Anspruch 1 bis 3, **dadurch gekennzeichnet,** daß die verstellbare Hohlformhälfte (8) neben der Schneidfläche einen Vorsprung (11) aufweist, der geringeren Abstand vom Formwerkzeugtisch (5) aufweist als der Boden (12) der Hohlformhälfte (8).

*Fig.1*

*Fig.2*

| | EINSCHLÄGIGE DOKUMENTE | | EP 88116438.8 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | <u>GB - A - 2 135 621</u> (VELVET)<br>* Gesamt *<br><br>-- | 1 | B 26 F 1/44 |
| A | <u>GB - A - 2 182 596</u> (SEARLE)<br>* Gesamt *<br><br>---- | 1 | |

| | RECHERCHIERTE SACHGEBIETE (Int. Cl.4) |
|---|---|
| | B 26 F 1/00<br>B 26 D 1/00<br>B 26 F 3/00 |

Der vorliegende Recherchenbericht wurde für alle Patentansprüche erstellt.

| Recherchenort | Abschlußdatum der Recherche | Prüfer |
|---|---|---|
| WIEN | 17-01-1989 | TRATTNER |